# EUROPÄISCHE PATENTSCHRIFT

(11) **EP 1 795 066 B1**
(45) Veröffentlichungstag und Bekanntmachung des Hinweises auf die Patenterteilung: **04.06.2008**
(21) Anmeldenummer: 05027127.9
(22) Anmeldetag: 12.12.2005
(51) Int. Cl.: A01G 3/053

(54) **Motorisch angetriebenes Handschneidgerät für kleine Zierhecken, Gesträuche**
Motorized hand cutting device for little adornment hedges and bushes
Appareil de coupe portable à la main motorisé pour des petites haies d'ornement et buissons

(43) Veröffentlichungstag der Anmeldung: 13.06.2007
(73) Patentinhaber: Metabowerke GmbH, 72622 Nürtingen (DE)
(72) Erfinder: Seyerle, Jörg, 73257 Köngen (DE)
(74) Vertreter: Friz, Oliver

(56) Entgegenhaltungen:
- EP-A- 0 257 566
- DE-A1- 19 505 653
- GB-A- 188 348
- US-A- 2 443 027

## Beschreibung

Die Erfindung betrifft ein motorisch angetriebenes Handschneidgerät gemäß Oberbegriff des Anspruch 1. Ein solches Handschneidgerät ist beispielsweise aus der US-A-2443027 bekannt. Es umfasst zwei antreibbare Kreissägeblätter, die gegenläufig und konzentrisch angetrieben werden.

Ein weiteres Handschneidgerät der oben genannten Art ist beispielsweise aus DE 195 05 653 A1 bekannt. Bei diesem Gerät ist ein einziges kreisscheibenförmiges rotierend antreibbares Kreissägeblatt vorgesehen, welches über ein Winkelgetriebe antreibbar ist. Es sind zwei in einem Winkel von etwa 90° zueinander radial erstreckte Anschlagfinger vorgesehen, gegen die sich zu trennende Äste während der Ausführung des Schnitts durch das rotierende Sägeblatt abstützen können. Dieses Gerät eignet sich eher für einen Astschnitt, als für den Schnitt von eher nachgiebigen Hecken oder Sträuchern. Das Gerät führt eher einen Sägeschnitt aus, für den eine entsprechende Gegenkraft eines Auflagers erforderlich ist, wie sie nur von dickeren Ästen entgegengebracht werden kann.

Aus EP 0 384 471 B1 ist eine Motorsense mit langem Stielgriff bekannt, wobei 2 kreisscheibenförmige Sensenmesser mit Umfangszahnung über einen exzentrischen Antrieb gegensinnig in Umfangsrichtung hin- und hergehend oszillierend, also nicht rotierend, antreibbar sind. Das Gerät lässt sich nicht für einen Hecken- oder Strauchschnitt einsetzen. Außerdem ist die Konstruktion des gegensinnigen oszillierenden Antriebs kompliziert und verschleiß- sowie störanfällig.

Der vorliegenden Erfindung liegt die Aufgabe zugrunde, ein kleinbauendes motorisch angetriebenes Handschneidgerät, vorzugsweise für den Einhandbetrieb, zu schaffen, welches sich für den Schnitt kleiner Zierhecken, Sträucher oder Buchsbäume eignet, bei denen die zu trennenden Äste oder Zweige eine geringe Stärke von insbesondere < 8 mm und insbesondere < 5 mm und weiter vorzugsweise < 3 mm aufweisen. Das Gerät soll einen einfachen Aufbau haben und wartungs- sowie verschleißunempfindlich sein.

Diese Aufgabe wird durch ein Handschneidgerät der eingangsgenannten Art gelöst, das dadurch gekennzeichnet ist, dass das rotierend antreibbare erste Messer (12) leicht aus der Mitte exzentrisch gelagert ist.

Das erfindungsgemäße Gerät hat gegenüber an sich bekannten Heckenscheren mit linear erstreckten Messerleisten den Vorteil, dass es eben keine ausladenden langgestreckten Schneidwerkzeuge aufweist und daher sehr viel gewichtsoptimierter ist und sich für den Benutzer ohne große Mühe handhaben lässt, und zwar gerade im Einhandbetrieb. Durch ein rotierendes Messer mit im Wesentlichen radial erstreckten Zähnen lässt sich im Zusammenwirken mit dem feststehenden Messer eine für die beabsichtigte Verwendung hinreichende Schnittkraft erreichen. Der Schnitt lässt sich insbesondere durch den rotierenden Antrieb des einen kreisscheibenförmigen Messers effektiver ausführen als bei oszillierend angetriebenen Messern, d. h. bei einer Vorschubbewegung des Handschneidgeräts werden mehr dünne Äste erfasst und abgetrennt als bei bekannten Schneidgeräten. Der gleichmäßige rotatorische Antrieb des einen Messers ist auch mit einer größeren Laufruhe verbunden als ein oszillierender Antrieb, was vom Benutzer als komfortabler empfunden wird.

Bei der erfindungsgemäßen Ausführungsform des erfindungsgemäßen Handschneidgeräts ist das rotierend antreibbare erste Messer leicht aus der Mitte und damit exzentrisch gelagert. Bei rotierendem Antrieb führt es also eine leicht exzentrische Bewegung aus, so dass der Rotation noch eine geringfügige Translation gegenüber dem zweiten Messer überlagert wird. Es resultiert so ein ziehender Schnitt, der das Schneidergebnis noch verbessert und weiter zur Laufruhe und zu einem geringen Widerstand bei der Ausführung der Schnittbewegung beiträgt.

Des Weiteren erweist es sich als vorteilhaft, dass an den Zähnen des einen Messers in Umfangsrichtung scharf auslaufende Schneidkanten ausgebildet sind und die Zähne des anderen Messers im Wesentlichen stumpf ausgebildet sind. Wenn hier von einer stumpfen Ausbildung die Rede ist, so versteht man hierunter, dass eine in Schnittrichtung vordere Begrenzung der Zähne flächenhaft ausgebildet ist, also von einem eine Anlagefläche für das zu schneidende Gut bildenden Wandabschnitt gebildet ist, welcher Wandabschnitt in der Höhe vorzugsweise der Dicke des Messers entspricht. Bei einer solchen Ausbildung kann dann über den stumpfen Zahn das Schnittgut in optimaler Ausrichtung gegen die scharf auslaufende Schneidkante des anderen Messers gedrückt werden. Im Ergebnis ist die Schneidwirkung besser als wenn scharf auslaufende Kanten zusammenwirken. Diese werden schneller stumpf.

In noch weiterer Ausbildung dieses Erfindungsgedankens erweist es sich als vorteilhaft, wenn die stumpf ausgebildeten Zähne in der Draufsicht (in Richtung der Drehachse betrachtet) gezahnt, zickzackförmig oder wellenlinienförmig gestaltet sind. Auch dies verbessert das Schneidergebnis, weil das Schnittgut während der Ausführung des Schnitts besser positioniert wird und während der Ausführung des Trennschnitts in geringerem Maße gegenüber den Schneidkanten verkippt.

Nach einem weiteren Erfindungsgedanken erweist es sich als vorteilhaft, wenn das erste und/oder das zweite Messer gelöst und umgedreht wieder eingebaut werden können, so dass zuvor wenig beanspruchte Schneidkanten zum Einsatz gebracht werden können. Die Standzeit der scheibenförmigen Messer kann dadurch insgesamt erhöht werden.

Insoweit erweist es sich auch als vorteilhaft, dass dasjenige Messer mit in Umfangsrichtung scharf auslaufenden Schneidkanten an seiner Oberseite und an seiner Unterseite solche scharf auslaufenden Schneidkanten aufweist. Diese Schneidkanten sind dann in Umfangsrichtung des Messers in verschiedene Richtungen, also voneinander wegweisend orientiert. Betrachtet man das Messer mit Blick nach radial innen, so erscheinen die so ausgebildeten Schneidkanten insbesondere nach Art eines spitzwinkligen Parallelogramms. Wenn man das Messer löst und umgedreht wieder einbaut, so liegen die vormals von der Schnittrichtung abgewandten Schneidkanten nun in der Schnittrichtung und führen den Trennschnitt aus.

Es erweist sich weiter als vorteilhaft, wenn das eine Messer das andere Messer in allen Betriebsstellungen in radialer Richtung übergreift. Vorzugsweise handelt es sich bei dem übergreifenden Messer um das feststehende Messern. Solchenfalls kann auch ein Schneidschutz realisiert werden, indem bei Annäherung an den Umfang des feststehenden Messers keine Verletzungsgefahr droht. Eine Schnittwirkung wird also nur im Bereich zwischen den Zähnen innerhalb des feststehenden Messers erzielt.

Des weiteren erweist es sich als vorteilhaft, wenn das rotierend antreibbare erste Messer höchstens 10, insbesondere höchstens 8, insbesondere höchstens 6, insbesondere höchstens 5, insbesondere höchstens 4, insbesondere höchstens 3 Zähne aufweist. Es verbleibt dann mehr Zeit für das Schnittgut, um in den Schneidspalt oder Zwischenraum zwischen den Zähnen des feststehenden Messers einzugreifen, um dann wirkungsvoll geschnitten zu werden.

Nach einem weiteren Erfindungsgedanken umfasst das Gerät einen Sensor, der bei Annäherung eines weiteren Gegenstands den motorischen Antrieb ausschaltet. Bei einem solchen weiteren Gegenstand kann es sich z. B. um einen metallischen Gegenstand handeln, so dass der betreffende Sensor auf metallisches Material anspricht. Beispielsweise kann der weitere Gegenstand in vorteilhafter Weise ein metallischer Kettenhandschuh sein, der zum Schutz der anderen Hand des Benutzers getragen wird. Sobald der Benutzer mit seiner anderen, also freien Hand dem Schneidgerät bzw. dem Sensor des Schneidgeräts nahe kommt, wird der motorische Antrieb ausgeschaltet.

Nach einem weiteren Erfindungsgedanken umfasst das Schneidgerät ein Halterungshilfsmittel, insbesondere ein Spannmittel, beispielsweise ein Spannband, mit dem das Schneidgerät an der Hand oder dem Unterarm eines Benutzers befestigt werden kann. Der Benutzer braucht dann mit der den Gehäusekörper ergreifenden Hand das Gerät nicht die ganze Zeit fest zu umgreifen, sondern es genügt ein loser Griff zur Führung des Geräts. Mit derartigen Halterungshilfsmitteln kann auch eine einfache Drückerbetätigung vorgesehen werden, derart dass der Benutzer einen Drücker oder Schiebeschalter ständig betätigt halten muss, um das Gerät in Betrieb zu halten. Dies ist zwar weniger komfortabel als ein Betätigungselement, welches in der eingeschalteten Position verbleibt, es stellt aber eine größere Sicherheit für den Benutzer dar. Zusammen mit einem Halterungshilfsmittel der vorstehend erwähnten Art lässt sich das Schneidgerät aber auch so komfortabel bedienen. Es weist ferner in vorteilhafter Weise eine ergonomische Gestaltung des mit der Hand eines Benutzers ergreifbaren Gehäusekörpers auf.

Es erweist sich als besonders vorteilhaft, wenn das Schneidgerät einen akkubetriebenen Elektromotor aufweist, so dass eine als lästig empfundene Kabelverbindung in Wegfall gerät. Es wird vorteilhafterweise ein Lithiumionen-Akku verwendet, der insbesondere tafelförmig ausgebildet ist.

Es erweist sich des Weiteren als vorteilhaft und die Betriebssicherheit erhöhend, wenn das Schneidgerät über einen weiteren Sensor verfügt, der das Vorhandensein einer Schutzvorrichtung, insbesondere eines Schutzhandschuhs bei der das Schneidgerät ergreifenden Hand des Benutzers detektiert und die Steuervorrichtung des Schneidgeräts so ausgebildet ist, dass es sich nur bei Anwesenheit dieser Schutzvorrichtung, insbesondere des Schutzhandschuhs, betreiben lässt. Für den Fall, dass der Benutzer das Gerät versehentlich loslässt, würde dann sofort der Sensor und die Steuervorrichtung des Schneidgeräts den motorischen Antrieb stillsetzen. Es könnte so die Betriebssicherheit erhöht werden, auch wenn kein für den Betrieb dauerhaft zu betätigender Schalter vorgesehen ist. Die Schutzvorrichtung kann hierfür ein von dem Sensor in dem Schneidgerät detektierbares Mittel aufweisen, beispielsweise einen Transponder, oder der Sensor ist ein Metallsensor, der beispielsweise einen metallischen Schutzhandschuh zu detektieren vermag.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Schneidgeräts. In der Zeichnung zeigt
- Figur 1: eine perspektivische schematische Darstellung der Antriebsanordnung eines erfindungsgemäßen Handschneidgeräts (schematisch ohne Gehäusekomponenten);
- Figur 2: eine schematische Seitenansicht eines erfindungsgemäßen Handschneigeräts mit einer Antriebsanordnung nach Figur 1;
- Figur 3: eine Seitenansicht des Geräts nach Figur 2;
- Figur 4: eine Draufsicht des Geräts nach Figur 2.

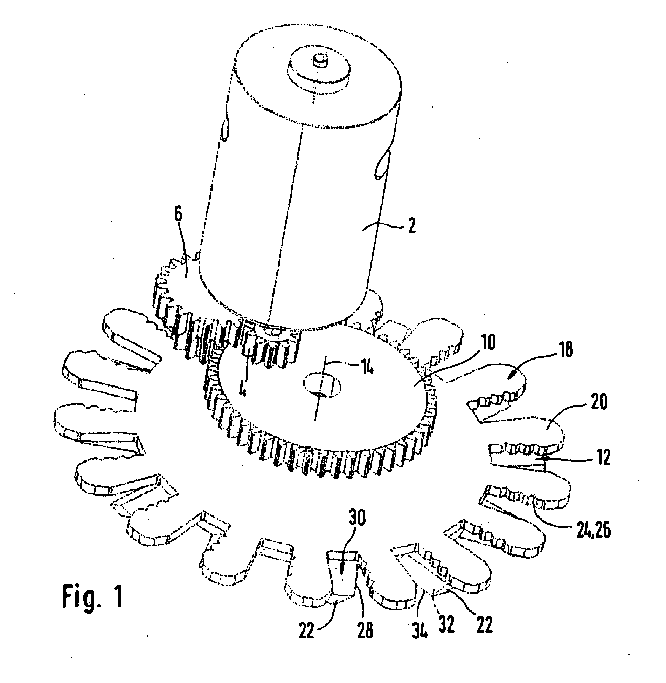

Figur 1 zeigt einen Elektromotor 2 mit einem Ritzel 4, das über zwei Getrieberäder 6, 8 8ALS Stufenzahnrad ausgebildet) ein mit größerem Durchmesser ausgebildetes Stirnrad 10 rotierend antreibt. Das Stirnrad 10 ist drehfest mit einem ersten kreisscheibenförmigen Messer 12 verbunden, und zwar derart, dass die gehäusefeste Drehachse 14 des Stirnrads 10 etwas außerhalb eines Mittelpunkts 16 des Messers 12 gelagert ist. Beim rotierenden Antrieb des Stirnrads 10 führt daher das Messer 12 eine leicht exzentrische Drehbewegung gegenüber einem in der Figur 1 nicht dargestellten Gehäuse des Schneidgeräts und gegenüber einem feststehenden kreisscheibenförmigen zweiten Messer 18 aus. Das feststehende zweite Messer 18 weist in seinem Mittelpunkt ein Öffnung auf, durch die sich die Drehachse 14 des Stirnrads 10 hindurcherstreckt. Das feststehende zweite Messer 18 ist also zwischen dem Stirnrad 10 und dem ersten rotierend antreibbaren Messer 12 angeordnet.

Das erste rotierend antreibbare Messer 12 und das zweite feststehende Messer 18 liegen im Wesentlichen nahezu aneinander an. Beide Messer haben im Wesentlichen in radialer Richtung erstreckte Zähne 20 bzw. 22. Die Zähne 20 des feststehenden zweiten Messers 18 erstrecken sich in radialer Richtung bei allen Drehstellungen einige Millimeter über die freien radialen Enden der Zähne 22 des ersten Messers 12 hinaus, was einen Berührungsschutz darstellt und die Betriebssicherheit erhöht.

Man erkennt, dass die Zähne 20 des zweiten Messers 18 eine stumpfe Schneidkante 24 in Form von Wandabschnitten 26 aufweisen, die der Dicke des Messers 20 entsprechen. In der Draufsicht auf das Messer 18 in Richtung der Drehachse betrachtet sind diese Wandbereiche 26 zickzackförmig erstreckt. Sie vermögen so kleine Äste während der Ausführung des Schnittvorgangs besser in einer Schneideposition zu halten und zu stützen.

Die Zähne 22 des rotierend antreibbaren ersten Messers 12 sind hingegen scharf mit einer in der Umfangsrichtung scharf auslaufenden Schneidkante 28 ausgebildet. Die Schneidkante 28 liegt in der Ebene derjenigen Oberseite 30 des Messers 12, die dem feststehenden zweiten Messer 18 zugewandt ist. - Man erkennt des Weiteren, dass auch auf der anderen Oberseite 32, welche von dem feststehenden Messer 18 abgewandt ist, eine scharf auslaufende Schneidkante 34 ausgebildet ist, die in Umfangs- oder Schnittrichtung der ersten Schneidkante 28 abgewandt ist. Dies hat den Vorteil, dass das erste Messer 12 umgedreht werden kann, so dass dann die Schneidkante 34 in der Schnittrichtung vorn liegt. So kann insgesamt die Standzeit des ersten Messers 12 erhöht werden. In diesem Zusammenhang erweist es sich auch als vorteilhaft, wenn auch das zweite feststehende Messer 18 ebenfalls umgekehrt eingebaut werden kann. Es ist hierfür von dem Gehäuse lösbar. Das zweite Messer 18 ist über an sich beliebige Mittel an dem Gehäuse montierbar. Beispielhaft können hierfür Schrauben verwendet sein.

Bei rotierendem Antrieb des Messers 12 über den Elektromotor 2 und die Getrieberäder 4 bis 8 sowie das Stirnrad 10 führt das erste Messer 12 eine rotierende und leicht exzentrische Bewegung gegenüber dem zweiten feststehenden Messer 18 aus. Es entsteht so ein ziehender Schnitt, der zu einem sehr guten Schneidergebnis führt. Bei einer bevorzugten Ausführungsform weist das rotierend antreibbare erste Messer 12 nur eine verhältnismäßig geringe Zahl von Zähnen auf, beispielsweise nur 2-5 Zähne, insbesondere 3 Zähne, während das zweite Messer 18 eine Vielzahl von beispielsweise 15 bis 20 Zähnen aufweist.

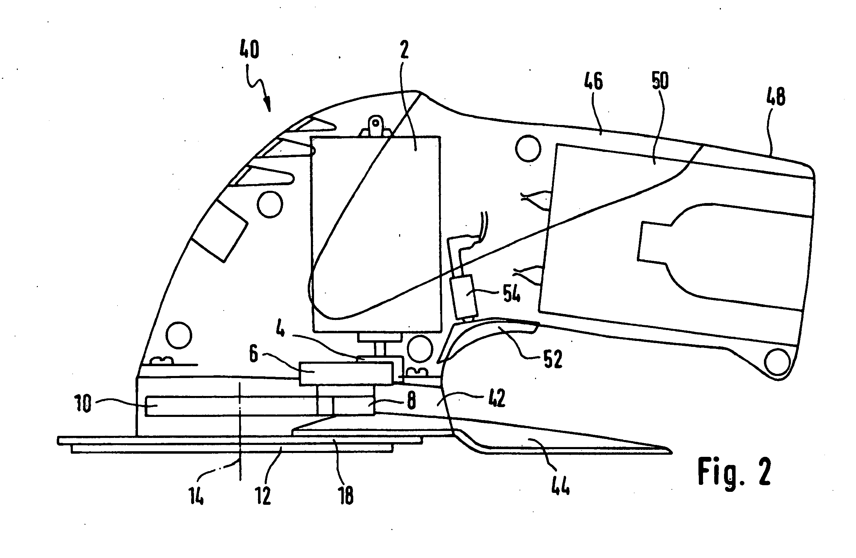

Figur 2 zeigt eine schematische Seitenansicht (teilweise aufgerissen) eines erfindungsgemäßen Handschneidgeräts 40 mit einer vorstehend beschriebenen Antriebsanordnung. Man erkennt die vorstehend beschriebenen Komponenten, nämlich den Elektromotor 2, das Ritzel 4, die Getrieberäder 6,8 und das Sternrad 10 sowie dessen Drehachse 14, die eine Antriebsachse für das rotierend antreibbare erste Messer 12 bildet. Die Antriebsachse 14 erstreckt sich durch eine zentrale Öffnung des zweiten feststehenden Messers 18 hindurch. Man erkennt außerdem, dass die Drehachse 14 nicht mittig sondern leicht exzentrisch zu dem ersten Messer 12 angeordnet ist. Beim rotierenden Antrieb des ersten Messers 12 führt dieses daher gegenüber dem zweiten feststehenden Messer 18 eine exzentrisch rotierende Bewegung aus. Das erste Messer 18 ist von unten gegen einen metallischen Gehäusebereich 42 fixiert, insbesondere geschraubt. Man erkennt des weiteren, dass sich von diesem metallischen Gehäusebereich 42 eine insbesondere lösbare Schutzschildvorrichtung 44 nach hinten erstreckt. Sie schützt somit die Finger eines Benutzers, wenn dieser einen Griffbereich 46 des Gehäusekörpers 48 des Handschneidgeräts 40 umgreift. In den anderen Richtungen bildet das feststehende zweite Messer 18 eine Schutzvorrichtung, da seine Zähne 20 in allen Drehstellungen des ersten Messers 12 die Zähne 22 des ersten Messers 12 in radialer Richtung übergreifen. Es wäre beispielsweise auch denkbar und vorteilhaft, dass zusätzlich auf der Unterseite des antreibbaren ersten Messers 12 ein weiteres Schutzschild vorgesehen ist, welches das rotierende Messer 12 bis auf ein vorderes Schneidsegment überfängt. Dieses Schneidsegment könnte einen Öffnungswinkel von beispielsweise 90 bis 150° haben.

Des weiteren ersichtlich ist ein tafelförmiger Akkupack 50, der von hinten in eine Schachtförmige Aufnahme des Gehäusekörpers 48 einsetzbar ist.

Des weiteren angedeutet ist ein federbelasteter Ein-/Ausschalter 52 und ein elektrischer Mikroschalter 54, mittels dessen der Elektromotor 2 angesteuert wird.

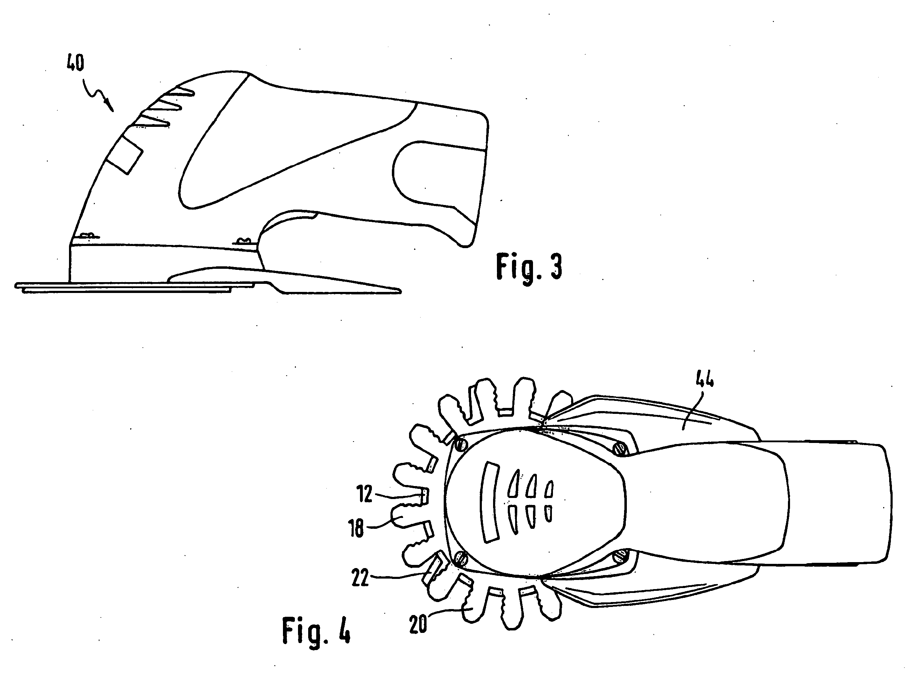

Figuren 3 und 4 zeigen eine Seitenansicht und eine Draufsicht auf das erfindungsgemäße Handschneidgerät 40.

## Patentansprüche

1. Motorisch angetriebenes Handschneidgerät für kleine Zierhecken, Sträucher oder Buchsbäume, mit einem mit einer Hand eines Benutzers ergreifbaren Gehäusekörper, welcher den Antriebsmotor (2) und Getriebekomponenten (4, 6, 8, 10) für den Antrieb eines Schneidwerkzeugs umfasst, welches von dem Gehäusekörper vorsteht, wobei das Schneidwerkzeug ein rotierend antreibbares kreisscheibenförmiges erstes Messer (12) und ein parallel hierzu im wesentlichen nahezu an das erste Messer (12) anliegendes feststehendes oder gegenläufig insbesondere mit geringerer Geschwindigkeit rotierend antreibbares scheibenförmiges zweites Messer (18) aufweist und beide Messer (12, 18) an ihrem Umfang vorzugsweise mehrere radial erstreckte Zähne (20, 22) aufweisen, die zur Ausführung eines Schnittvorgangs aneinander vorbeigleiten, **dadurch gekennzeichnet, dass** das rotierend antreibbare erste Messer (12) leicht aus der Mitte exzentrisch gelagert ist.

2. Handschneidgerät nach Anspruch 1, **dadurch gekennzeichnet, dass** an den Zähnen (22) des einen Messers (18) in Umfangsrichtung scharf auslaufende Schneidkanten (28, 34) ausgebildet sind und die Zähne (20) des anderen Messers (12) stumpf ausgebildet sind.

3. Handschneidgerät nach Anspruch 2, **dadurch gekennzeichnet, dass** die Zähne (20) des anderen Messers (12) in der Draufsicht in Richtung der Drehachse (14) gezahnt zickzackförmig oder wellenlinienförmig gestaltet sind.

4. Handschneidgerät nach einem der vorstehenden Ansprüche, **dadurch gekennzeichnet, dass** das erste und/oder das zweite Messer (12, 18) gelöst und umgedreht wieder eingebaut werden können, so dass zuvor wenig beanspruchte Schneidkanten zum Einsatz gebracht werden können.

5. Handschneidgerät nach Anspruch 2,3 oder 4, **dadurch gekennzeichnet, dass** dasjenige Messer (18) mit in Umfangsrichtung scharf auslaufenden Schneidkanten (28, 34) an seiner Oberseite (30) und seiner Unterseite (32) scharf auslaufende Schneidkanten (28, 34) aufweist.

6. Handschneidgerät nach einem der vorstehenden Ansprüche, **dadurch gekennzeichnet, dass** das eine Messer (12, 18) das andere Messer (18, 12) in allen Betriebsstellungen in radialer Richtung übergreift.

7. Handschneidgerät nach einem der vorstehenden Ansprüche, **dadurch gekennzeichnet, dass** das rotierend antreibbare erste Messer (12) höchstens 10, insbesondere höchstens 8, insbesondere höchstens 6, insbesondere höchstens 5, insbesondere höchstens 4, insbesondere höchstens 3 Zähne (20) aufweist.

8. Handschneidgerät nach einem der vorstehenden Ansprüche, **dadurch gekennzeichnet, dass** das Gerät einen Sensor umfasst, der bei Annäherung eines weiteren Gegenstands den motorischen Antrieb ausschaltet.

9. Handschneidgerät nach Anspruch 8, **dadurch gekennzeichnet, dass** der weitere Gegenstand ein metallischer Kettenhandschuh zum Schutz der anderen Hand des Benutzers ist.

10. Handschneidgerät nach einem der vorstehenden Ansprüche, **dadurch gekennzeichnet, dass** das Gerät ein Halterungshilfsmittel, insbesondere ein Spannmittel, aufweist, mit dem es an der Hand oder am Unterarm eines Benutzers befestigt werden kann.

11. Handschneidgerät nach einem der vorstehenden Ansprüche, **dadurch gekennzeichnet, dass** das Gerät einen Sensor umfasst, der das Vorhandensein einer Schutzvorrichtung detektiert, und die Steuervorrichtung des Schneidgeräts so ausgebildet ist, dass sie den Betrieb des Schneidgeräts nur gestattet, wenn das Vorhandensein einer Schutzvorrichtung detektiert wird.

12. Handschneidgerät nach einem der vorstehenden Ansprüche, **dadurch gekennzeichnet**, **gekennzeichnet durch** einen akkubetriebenen Elektromotor.

13. Handschneidgerät nach einem der vorstehenden Ansprüche, **dadurch gekennzeichnet**, **gekennzeichnet durch** einen insbesondere tafelförmigen Lithiumionen-Akku.

## Claims

1. Motor-driven hand held cutting device, for small ornamental hedges, shrubs, or box trees, with a housing element which can be held in a hand of the user and which comprises the drive motor (2) and drive components (4, 6, 8, 10) for driving a cutting tool which projects from the housing elements, the cutting tool having a first rotationally drivable, circular-disc-shaped blade (12), and a second circular-disc-shaped blade (18), which lies parallel to and substantially almost against the first blade (12), and is either fixed or drivable in the opposite direction, in particular at a lower speed, and both blades (12, 18) preferably having on their circumference a plurality of radially extending teeth (20, 22), which slide past one another to effect a cut, **characterised in that** the first rotationally drivable blade (12) is mounted eccentrically a little off-centre.

2. Hand held cutting device according to claim 1, **characterised in that** cutting edges (28, 34) which are sharply peaked in the peripheral direction are formed on the teeth (22) of one blade (18), and the teeth (20) of the other blade (12) are formed so as to be blunt.

3. Hand held cutting device according to claim 2, **characterised in that** the teeth (20) of said other blade (12) are shaped with zigzag serrations or as a wavy line, in the direction of the axis of rotation (14) as seen from above.

4. Hand held cutting device according to any one of the preceding claims, **characterised in that** the first and/or second blade (12, 18) can be released and reinstalled the other way around, so that cutting edges which were previously made little use of can be put to use.

5. Hand held cutting device according to any one of claims 2, 3 or 4, **characterised in that** the blade (18) which comprises cutting edges (28, 34) that are sharply peaked in the peripheral direction also has sharply peaked cutting edges (28, 34) on its upper side (30) and its lower side (32).

6. Hand held cutting device according to any one of the preceding claims, **characterised in that** in all operating positions, one blade (12, 18) overlaps the other blade (18, 12) in a radial direction.

7. Hand held cutting device according to any one of the preceding claims, **characterised in that** the first rotationally drivable blade (12) has at most 10, in particular at most 8, in particular at most 6, in particular at most 5, in particular at most 4, in particular at most 3 teeth (20).

8. Hand held cutting device according to any one of the preceding claims, **characterised in that** the device comprises a sensor which switches off the drive from the motor upon the approach of a further object.

9. Hand held cutting device according to claim 8, **characterised in that** the further object is a metal chain glove to protect the other hand of the user.

10. Hand held cutting device according to any one of the preceding claims, **characterised in that** the device has an auxiliary holding means, in particular a clamping means, with which said device can be fixed onto the hand or forearm of a user.

11. Hand held cutting device according to any one of the preceding claims, **characterised in that** the device comprises a sensor which detects the presence of a protection device, and the control device of the cutting tool is configured in such a way as to allow the operation of the cutting device only when the presence of a protection device is detected.

12. Hand held cutting device according to any one of the preceding claims, **characterised by** a battery-powered electric motor.

13. Hand held cutting device according to any one of the preceding claims, **characterised by** a lithium ion battery, in particular a tabular lithium ion battery.

## Revendications

1. Appareil de coupe manuel entraîné par moteur destiné à de petites haies décoratives, des buissons ou des buis, comprenant un corps de boîtier pouvant être saisi avec une main d'un utilisateur, lequel comprend le moteur d'entraînement (2) et des composants d'engrenage (4, 6, 8, 10) pour l'entraînement d'un outil de coupe, lequel dépasse du corps de boîtier, l'outil de coupe présentant un premier couteau (12) pouvant être entraîné par rotation et un second couteau (18) en forme de disque, fixe, s'appliquant parallèlement au premier et sensiblement pratiquement sur le premier couteau (12) ou pouvant être entraîné par rotation dans le sens contraire, en particulier avec une vitesse plus faible, et les deux couteaux (12, 18) présentant sur leur pourtour de préférence plusieurs dents (20, 22) étirées radialement, qui glissent en passant les unes devant les autres pour l'exécution d'une opération de coupe, **caractérisé en ce que** le premier couteau (12) pouvant être entraîné par rotation est logé de façon légèrement excentrée à partir du centre.

2. Appareil de coupe manuel selon la revendication 1, **caractérisé en ce que** des arêtes de coupe (28, 34) se terminant de façon aiguisée dans le sens périphérique sont réalisées sur les dents (22) d'un couteau (18) et les dents (20) de l'autre couteau (12) sont conçues de façon émoussée.

3. Appareil de coupe manuel selon la revendication 2, **caractérisé en ce que** les dents (20) de l'autre couteau (12) sont conçues, en vue de dessus et en direction de l'axe de rotation (14), dentées, en forme de zigzag ou en forme de ligne ondulée.

4. Appareil de coupe manuel selon l'une quelconque des revendications précédentes, **caractérisé en ce que** le premier et/ou le second couteau (12,18) peuvent être détachés et remontés de façon inversée, de sorte que des arêtes de coupe moins sollicitées auparavant peuvent être utilisées.

5. Appareil de coupe manuel selon la revendication 2, 3 ou 4, **caractérisé en ce que** le couteau (18) avec des arêtes de coupe (28, 34) se terminant de façon aiguisée dans le sens périphérique présente sur son côté supérieur (30) et son côté inférieur (32) des arêtes de coupe (28, 34) se terminant de façon aiguisée.

6. Appareil de coupe manuel selon l'une quelconque des revendications précédentes, **caractérisé en ce qu'**un couteau (12, 18) recouvre l'autre couteau (18, 12) dans toutes les positions de service dans le sens radial.

7. Appareil de coupe manuel selon l'une quelconque des revendications précédentes, **caractérisé en ce que** le premier couteau (12) pouvant être entraîné par rotation présente au maximum 10, en particulier au maximum 8, en particulier au maximum 6, en particulier au maximum 5, en particulier au maximum 4, en particulier au maximum 3 dents (20).

8. Appareil de coupe manuel selon l'une quelconque des revendications précédentes, **caractérisé en ce que** l'appareil comprend un capteur qui déconnecte l'entraînement par moteur lorsqu'on approche d'un autre objet.

9. Appareil de coupe manuel selon la revendications 8, **caractérisé en ce que** l'autre objet est un gant à chaîne métallique pour la protection de l'autre main de l'utilisateur.

10. Appareil de coupe manuel selon l'une quelconque des revendications précédentes, **caractérisé en ce que** l'appareil est un moyen d'aide de support, en particulier un moyen de tension, avec lequel il peut être fixé sur la main ou sur l'avant-bras d'un utilisateur.

11. Appareil de coupe manuel selon l'une quelconque des revendications précédentes, **caractérisé en ce que** l'appareil comporte un capteur qui détecte la présence d'un dispositif de protection et le dispositif de commande de l'appareil de coupe est conçu de telle sorte qu'il permet le fonctionnement de l'appareil uniquement lorsque la présence d'un dispositif de protection est détectée.

12. Appareil de coupe manuel selon l'une quelconque des revendications précédentes, **caractérisé par** un moteur électrique fonctionnant sur accu.

13. Appareil de coupe manuel selon l'une quelconque des revendications précédentes, **caractérisé par** un accu aux ions de lithium, en particulier en forme de plaque.
